# EUROPEAN PATENT SPECIFICATION

(11) **EP 2 156 995 B1**
(45) Date of publication and mention of the grant of the patent: **18.09.2013**
(21) Application number: 09164331.2
(22) Date of filing: 01.07.2009
(51) Int. Cl.: B60R 21/239, B60R 21/233

(54) **Airbag cushion and airbag apparatus**
Airbagkissen und Airbagvorrichtung
Coussin d'airbag et appareil d'airbag

(30) Priority: 06.08.2008 JP 2008203245
(43) Date of publication of application: 24.02.2010
(73) Proprietor: TAKATA CORPORATION, Minato-ku, Tokyo 106-8510 (JP)
(72) Inventor: Kumagai, Masayohi c/o TAKATA CORPORATION, Tokyo 106-8510 (JP); Miyata, Yasuhito c/o TAKATA CORPORATION, Tokyo 106-8510 (JP); Abe, Kazuhiro c/o TAKATA CORPORATION, Tokyo 106-8510 (JP); Knappe, Christoph c/o TAKATA CORPORATION, Tokyo 106-8510 (JP)
(74) Representative: Vossius & Partner

(56) References cited:
- EP-A- 1 398 228
- WO-A-2008/015877
- WO-A-2009/016871
- FR-A- 2 757 465
- JP-A- 2000 142 307
- JP-A- 2007 099 104

## Description

The present invention relates to an airbag cushion including an opening and closing vent and a gas bleeding restraining member configured to restrain gas from the opening and closing vent from bleeding and, more specifically, to an airbag cushion configured in such a manner that the opening and closing vent is closed until an occupant comes into contact with a face surface of the inflated airbag cushion and the vent is opened when the occupant comes into contact with the face surface of the inflated airbag cushion and the face surface is pressed backward. The present invention also relates to an airbag apparatus having this airbag cushion.

In the present invention, the term AF05 type occupant dummy is an occupant dummy for a vehicle collision experiment which imitates a 5 percentile small size adult woman specified in United State Laws and Regulations, and the term AM50 type occupant dummy is an occupant dummy for a vehicle collision experiment which imitates a 50 percentile adult man which has a larger size than that.

Providing a vent on an airbag cushion and allowing gas to bleed from the interior of an airbag cushion out of the airbag cushion via the vent when the vehicle occupant or the like come into contact with the inflated airbag cushion to receive the vehicle occupant or the like softly by the airbag cushion is publicly known.

In the publication US2006/0151979A1 (Patent Document 1), a configuration in which the vent is opened and closed according to the position of the occupant when the airbag cushion is inflated is described.

In this publication, a vent is provided on a side surface of an airbag cushion, and a vent flap is attached so as to cover the vent from the inside of the airbag cushion. This vent flap is joined at one end thereof to a portion in the vicinity of the vent by stitching or the like and is not joined to the airbag cushion at the other end. A strap is continued from the other end side of the vent flap. The distal end side of the strap is connected to a face surface of the airbag cushion when inflated. A midsection of the strap is inserted into a loop provided on an inner surface of the airbag cushion.

When the airbag cushion is started to be inflated, the vent flap is drawn out of the airbag cushion via the vent, whereby the vent is released.

In a state in which the occupant is positioned at a normal seated position, that is, so-called an in-position, the airbag cushion is inflated to an inflation-completed shape before the occupant comes into contact with the face surface. At this time, the entire part of the vent flap is pulled by the strap and is pulled inwardly of the airbag cushion, and the vent flap is pushed against the vent by a gas pressure in the airbag cushion and closes the vent. Accordingly, bleeding of the gas from the vent is restrained.

In a state in which the occupant is positioned forward of the normal seated position, that is, so called an out-of-position, the occupant comes into contact with the face surface of the airbag cushion before the airbag cushion is inflated to the inflation-completed shape. Therefore, the vent flap is not pulled inwardly of the airbag cushion by the strap, and the vent is kept in the released state. Accordingly, the gas bleeds from the airbag cushion via the vent, and the airbag cushion loses its reaction force.

Even in a state of the in-position in which the occupant is positioned in the normal seated position, the vent is preferably released to allow the gas to bleed out of the airbag cushion after the airbag cushion has received the occupant. In this case, the vent is preferably released in an early stage after the occupant has come into contact with the airbag cushion.

The occupant fastened with seat belts and seated on a seat is constrained at a lumbar part from moving forward by a lap belt upon collision of the vehicle, so that an upper half body moves forward as if it falls to the front about a portion around the lumbar part as an axis. Therefore, the head portion of the upper half body of the occupant comes into contact with the face surface of the airbag cushion in an earlier stage in comparison with other portions.

WO 2008/015877 A relates to an airbag and an airbag device in which vent holes are closed or slightly opened before an occupant thrusts his body into the airbag and opened or largely opened after the occupant thrusts his body into the same. Inner panels are provided in the airbag. The vent holes for allowing the inside and the outside of the airbag to communicate with each other are formed in a rear panel. A cover member covering the vent hole is provided on the outer surface of the rear panel. A tether connects the cover member to the inner panels through the normally opened vent hole. This document describes the features mentioned in the preamble of claim 1.

JP 2000 142307 A relates to an airbag device for a vehicle to protect an occupant seated on a place other than a fixed position. In introduction of pressure gas, a bag body is expanded, and a part of its lid is torn along an H-shaped tearing groove so as to be formed into an expansion opening, while the bag body is developed from the expansion opening diagonally toward the vehicle body back part. In this way, the bag body receives the head part and the like of an occupant on a front passenger seat side for protection. When the occupant is seated on a seat other than a fixed position, the bag body will expand in the vehicle width direction when its expansion toward the vehicle longitudinal direction is stopped by the occupant, so that a strap collides against the occupant and is pulled in the vehicle width direction. Then, a cuttable thread is cut and a vent hole is opened, and pressure gas is discharged from the airbag so that an internal pressure is lowered and impact to the occupant is reduced.

FR 2 757 465 A1 relates to an airbag for vehicle passenger protection comprising a vent hole at the rear face of the airbag and straps which connect the rear face and the front face of the airbag. When the bag inflates after an accident, the strap 3 is in tension and holds the valve closed thereby sealing the bag. When the passenger is thrown against the bag, the strap relaxes and allows the pressure in the bag to open the valve to release gas pressure and deflate the bag.

EP 1 398 228 A relates to an airbag module having a vent that is controlled by tether. A support member has a first vent opening for enabling flow of inflation fluid away from the bag. A vent member is movable relative to the first vent opening between a first condition in which the vent member does not close the opening that enables flow of inflation fluid away from the bag and a second condition in which the vent member at least partially blocks the flow of inflation fluid through the opening and away from the bag. A tether has a first portion connected for movement with the bag as the bag is deployed. The tether is associated with the vent member and causes it to move relative to the opening from the first condition to the second condition as the bag is deployed.

JP 2007 099104 A relates to an airbag device that allows an airbag to be inflated and deployed quickly and to exhaust a large quantity of gas upon receiving an occupant after the completion of inflation and deployment. The airbag device includes member installed at an opening in an airbag body which is adapted to change state of the airbag body from a non-exhausting state to an exhausting state, and a tether belt through which part of the inside surface of the airbag body is coupled with the changeover member. The tether belt is drawn so that the member 30 is introduced into the airbag body in a state in which the airbag body is inflated and deployed into a regular shape. The tether belt is loosened in a state in which the airbag body is inflated and deployed and deformed upon receiving the occupant, and the member is put in the exhaust state.

It is an object of the present invention to provide a car coimprising an airbag cushion in which an opening and closing vent is released in an early stage when an occupant fastened with seat belts and seated on a seat comes into contact with a face surface of the inflated airbag cushion upon collision of the vehicle. This object is achieved with the features of the claims.

An airbag cushion according to the present invention is an airbag cushion including an opening and closing vent and a gas bleeding restraining member configured to restrain gas from bleeding from the opening and closing vent, the gas bleeding restraining member closing the opening and closing vent or bringing the same into a small opening when an occupant does not come into contact with a face surface of the airbag cushion when the airbag is inflated, and opening the opening and closing vent or bringing the same into a large opening when the occupant comes into contact with the face surface of the inflated airbag cushion whereby the face surface is moved backward in the direction opposite from the occupant to allow the gas to be discharged from the opening and closing vent out of the airbag cushion, in which the gas bleeding restraining member is configured to open the opening and closing vent or bring the same into the large opening when a head-faced portion of the face surface of the inflated airbag cushion facing the head portion of the occupant is moved backward in the direction opposite from the occupant.

The airbag cushion according to the invention is adapted for an occupant represented by an AF05 type dummy.

In the airbag cushion according to the invention at least the head-faced portion of the face surface of the airbag corresponds to a recessed ridge which is recessed toward a counter-occupant direction with respect to the periphery thereof in a state in which the inflation is completed.

In the airbag cushion according to the invention the gas bleeding restraining member closes the opening and closing vent or brings the same into the small opening when a tensile force is applied inwardly of the airbag cushion and opens the opening and closing vent or brings the same into the large opening when the tensile force is reduced, the airbag cushion further includes a connecting member configured to connect the gas bleeding restraining member and the head-faced portion, the connecting portion is tensed between the head-faced portion and the gas bleeding restraining member when the occupant does not come into contact with the head-faced portion in a state in which the airbag cushion is inflated and whereby the tensile force is applied to the gas bleeding restraining member to close the opening and closing vent or bring the same into the small opening, and the connecting member is loosened when the occupant comes into contact with the head-faced portion of the inflated airbag cushion, whereby the head-faced portion is moved backward, whereby the tensile force is reduced and the opening and closing vent is opened or brought into the large opening.

In the airbag cushion according to the invention the connecting member extends in substantially parallel to the direction in which the head-faced portion is pressed from the head portion when the head portion of the occupant comes into contact with the head-faced portion when viewing the airbag from the left and right of the occupant in a state in which the airbag is inflated.

In the airbag cushion according to the invention the connecting member extends substantially horizontally or in the direction to be lowered as it goes away from the head-faced portion in the state in which the airbag cushion is inflated.

In the airbag cushion according to the invention the angle of the direction of extension of the connecting member with respect to the horizontal direction is from 0 to 50° in the state in which the airbag cushion is inflated.

In the airbag cushion according to the invention the connecting member is continued to a range from 0 to 80 mm from a center of the head-faced portion in the lateral direction to the left and right in the head-faced portion in the state in which the airbag cushion is inflated.

In the airbag cushion according to the invention the gas bleeding restraining member is a vent flap which covers the opening and closing vent, the connecting member is tensed between the head-faced portion and the vent flap when the airbag cushion is inflated, whereby the movement of the vent flap outwardly of the airbag cushion is prohibited, and the connecting member is loosened when the vent flap is overlapped with the opening and closing vent to close the opening and closing vent or bring the same into the small opening and the occupant comes into contact with the head-faced portion of the inflated airbag cushion, whereby the head-faced portion is moved backward, so that the vent flap is moved away from the opening and closing vent by a gas pressure in the interior of the airbag cushion and the opening and closing vent is opened or brought into the large opening.

An airbag apparatus according to the present invention includes an airbag cushion and an inflator configured to inflate the airbag cushion.

In the airbag cushion according to the present invention and the airbag apparatus according to the present invention, the gas bleeding restraining member is configured to open the opening and closing vent or bring the same into the large opening when the head-faced portion of the face surface of the inflated airbag cushion opposing the head portion of the occupant is moved backward in the direction opposite from the occupant. Therefore, when the occupant seated on the seat with the seat belts fastened falls into the inflated airbag cushion and the head portion comes into contact with the face surface of the airbag cushion, the opening and closing vent is opened or brought into the large opening in an early stage.

Between a small size occupant and a large size occupant, the large size occupant has a larger kinetic energy upon collision of the vehicle. Therefore, in a case where the inflated airbag cushion receives the large size occupant, the internal pressure of the airbag cushion is preferably maintained at a high level for a relatively long time in comparison with a case of receiving the small size occupant.

Since the airbag cushion is configured in such a manner that the opening and closing vent is opened or brought into the large opening when the head-faced portion facing the head portion of the AF05 type dummy moves backward in a state of being inflated, when the small size occupant seated on the seat with the seat belts fastened falls into the inflated airbag cushion, the opening and closing vent is opened or brought into the large opening when the head portion of the occupant comes into contact with the head-faced portion in an early stage.

Also, when the large size occupant seated on the seat with the seat belts fastened falls into the inflated airbag cushion, since the head portion of the occupant comes into contact with a portion of the face surface of the airbag cushion away from the head-faced portion upward, the opening and closing vent is not opened or is not brought into the large opening immediately when the head portion of the occupant comes into contact with the face surface of the airbag cushion. Accordingly, when the inflated airbag cushion received the large size occupant, the internal pressure in the airbag cushion is maintained at a high level for a relatively long time, so that the large size occupant is stably received.

When the airbag cushion is inflated, a portion of the face surface which comes into contact with the head portion of the occupant is recessed, and hence the head portion of the occupant may be received so as to allow the head portion of the occupant to enter the recessed ridge, so that the occupant restraining effect is high.

When the occupant does not come into contact with the head-faced portion of the airbag cushion when the airbag cushion is inflated, the connecting member is tensed between the head-faced portion and the gas bleeding restraining member, whereby a tensile force is applied on the gas bleeding restraining member, so that the opening and closing vent is closed or is brought into the small opening. Then, when the occupant comes into contact with the head-faced portion of the inflated airbag cushion whereby the head-faced portion is moved backward, the connecting member is loosened, whereby the tensile force applied to the gas bleeding restraining member thereby is reduced, so that the opening and closing vent is opened or brought into the large opening.

In the present invention, preferably, in the state in which the airbag cushion is inflated, the connecting member extends in the direction substantially parallel to the direction in which the head-faced portion is pressed by the head portion when the head portion of the occupant comes into contact with the head-faced portion of the airbag cushion when viewing the airbag from the left and right of the occupant in a state in which the airbag is inflated.

In this configuration, when the head portion of the occupant comes into contact with the head-faced portion of the airbag cushion upon collision of the vehicle, since the direction of backward movement of the head-faced portion and the direction of extension of the connecting member are substantially the same direction, the amount of slackness of the connecting member is increased, so that the opening and closing vent is released quickly to the large opening.

As described above, the occupant seated on the seat with the seat belts fastened moves forward as if the upper half body moves forward as if it falls to the front about a portion around the lumbar part as an axis upon collision of the vehicle. Therefore, when the head portion of the occupant comes into contact with the head-faced portion of the airbag cushion, the head-faced portion is pressed obliquely downward from the substantially horizontal direction by the head portion of the occupant. Therefore, the connecting member preferably extends in the substantially horizontal direction or extends downward as it goes away from the head-faced portion in the state in which the airbag cushion is inflated and, in this case, as in Claim 8, it is preferably the angle of the extending direction of the connecting member with respect to the horizontal direction is 0 to 50°. In this configuration, when the head-faced portion is pressed and hence is moved backward from the head portion of the occupant seated on the seat with the seat belts fastened, the amount of slackness of the connecting member is increased, and the opening and closing vent is released quickly to the large opening.

The connecting member preferably continues in a range from 0 to 80 mm from the center of the head-faced portion in the lateral direction to the left and right in the head-faced portion in the state in which the airbag cushion is inflated. Accordingly, the opening and closing vent is released quickly when the head portion of the occupant comes into contact with the head-faced portion of the inflated airbag cushion.

Since the gas bleeding restraining member is a vent flap covering the opening and closing vent, the configuration is simple.

Referring now to the drawings, preferred embodiments of the present invention will be described.
Fig. 1 is a perspective view of an airbag cushion according to an embodiment of the present invention in an inflated state;
Fig. 2 is a side view of the airbag cushion in the inflated state in Fig. 1;
Fig. 3 is a cross-sectional view taken along the line III-III in Fig. 2;
Fig. 4 is a cross-sectional view of a portion similar to Fig. 3 in a state in which an opening and closing vent is released;
Fig. 5 is a side view showing a state in which a large size occupant faces the inflated airbag cushion;
Fig. 6 is a side view showing a behavior of a small size occupant who is not fastened with seat belts until he or she comes into contact with the inflated airbag cushion;
Fig. 7 is a cross-sectional view of a portion similar to Fig. 3 in a state immediately after the large size occupant who is not fastened with the seat belts comes into contact with the inflated airbag cushion;
Fig. 8 is a cross-sectional view of a portion similar to Fig. 3 in a state in which the opening and closing vent is released after the large size occupant who is not fastened with the seat belts comes into contact with the inflated airbag cushion;
Fig. 9 is a side view showing an arrangement of a tether in the embodiment and a comparative example;
Fig. 10 is a side view of the airbag cushion and the airbag apparatus according to another embodiment;
Fig. 11 is a side view of the airbag cushion and the airbag apparatus in Fig. 10;
Fig. 12 is a side view of the airbag cushion and the airbag apparatus according to another embodiment; and
Fig. 13 is a cross-sectional view taken along the line XIII-XIII in Fig. 12.

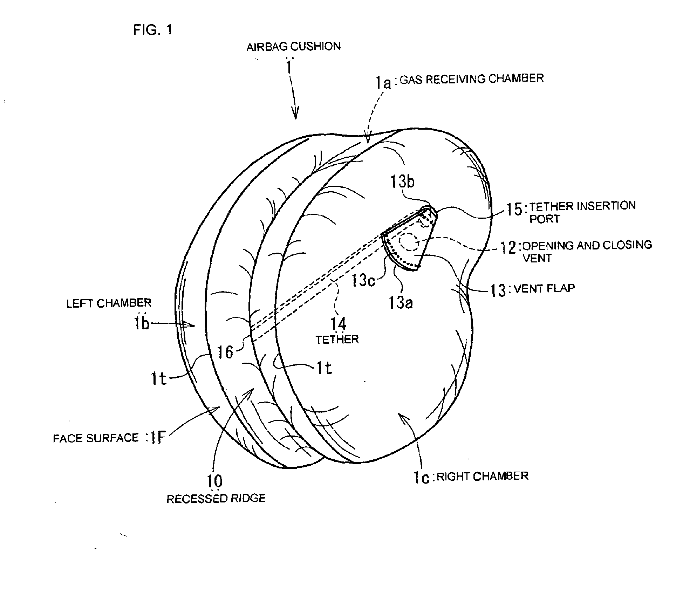

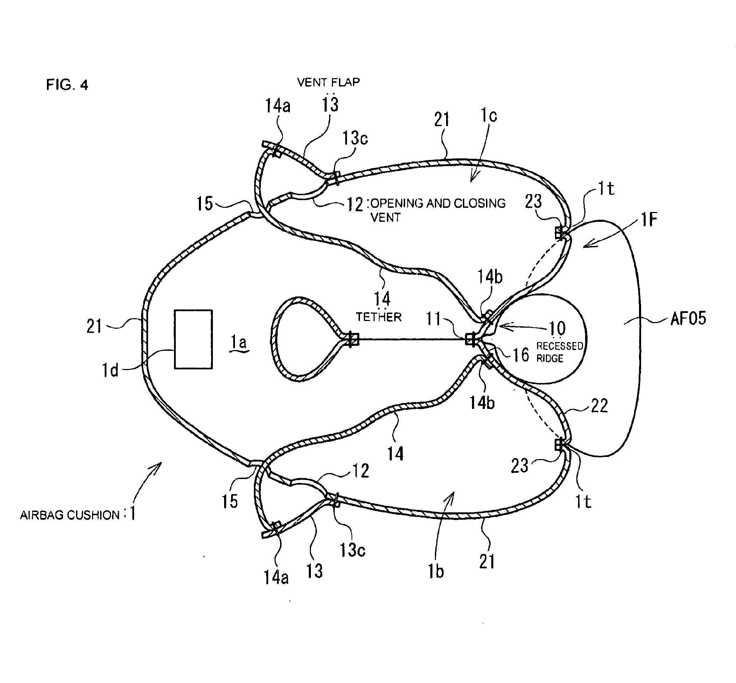

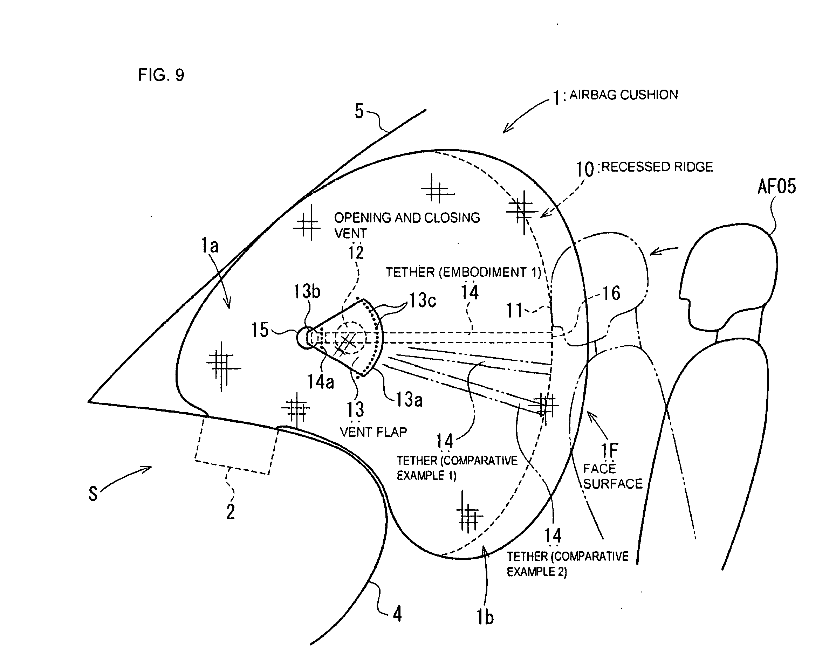

Figs. 1 to 9 show a first embodiment. Figs. 1 to 4 show a state in which the small size occupant faces the inflated airbag cushion.

In the following description, the small size occupant means an AF05 (5 percentile adult woman) type occupant dummy, and the large size occupant means an AM50 (50 percentile adult man) type occupant dummy.

In the following description, front and rear directions and left and right directions correspond to front and rear directions and left and right directions from the occupant.

In this embodiment, an airbag cushion 1 is a passenger airbag of a vehicle.

A passenger airbag apparatus S includes the airbag cushion 1, a case 2, and an inflator (not shown). The airbag cushion 1 is stored in the case 2 in a folded state and is inflated by the inflator. The case 2 is a container opened on an upper surface thereof and the upper surface thereof is covered with a lid (not shown). The passenger airbag apparatus S is installed on an upper surface portion of an instrument panel 4 of a motor vehicle. A windshield 5 exists above the instrument panel 4. The lid may constitute part of the instrument panel 4, and may be a plate separate from the instrument panel 4.

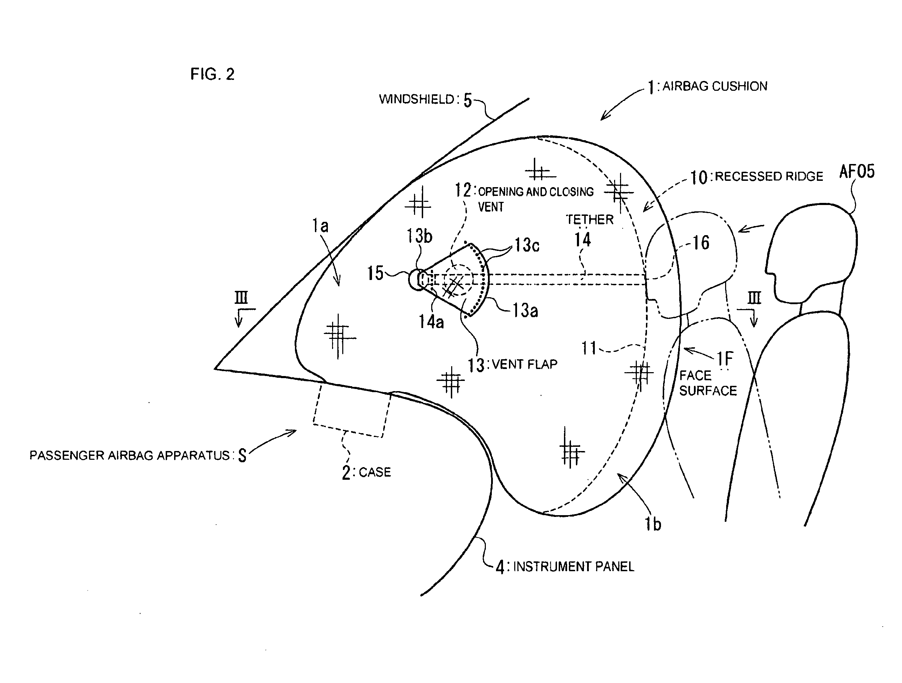

The airbag cushion 1 is inflated upward so as to fill a space between the instrument panel 4 and the windshield 5 from an upper surface of the instrument panel 4 by being supplied with gas from the inflator, and is inflated rearward of a vehicle body so as to fill a space in front of a passenger seat as shown in Fig. 2. A surface of the inflated airbag cushion 1 on the rear side of the vehicle body corresponds to a face surface 1F which faces the occupant on the passenger seat.

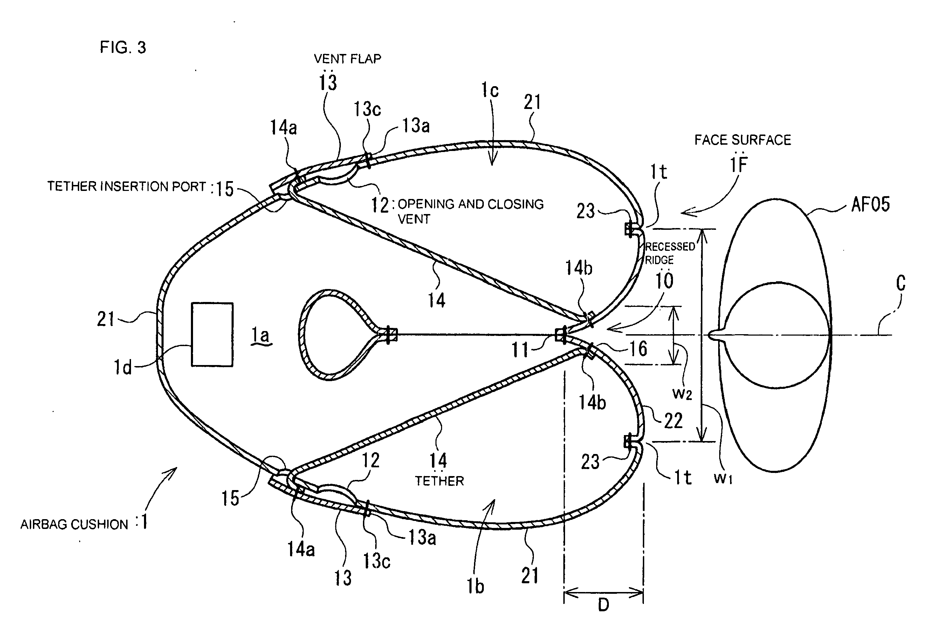

As shown in Fig. 3, in this embodiment, the airbag cushion 1 includes a gas receiving chamber 1a positioned at a frontmost side in the fore-and-aft direction of the vehicle body, and a left chamber 1b inflating on the front left side of the occupant, and a right chamber 1c inflated on the front right side of the occupant which are respectively continued from the gas receiving chamber 1a. The gas receiving chamber 1a is provided with a gas receiving chamber 1d on a bottom surface thereof for receiving gas from the inflator.

In a state in which the inflation of the airbag cushion 1 is completed, the left chamber 1b and the right chamber 1c respectively expand toward the occupant, and a recessed ridge 10 recessed in the direction opposite from the occupant is formed therebetween as shown in Fig. 3. Reference numeral 1t designates a distal portion in the direction of expansion of the left chamber 1b and the right chamber 1c. In this embodiment, a bridging member such as a tie panel does not exist between the distal portions 1t, 1t of the left chamber 1b and the right chamber 1c of the inflated airbag cushion 1, and the recessed ridge 10 therebetween is released toward the occupant. The recessed ridge 10 extends continuously from an upper portion to a lower portion of the airbag cushion 1. A deepest portion 11 of the recessed ridge 10 is curved in such a manner that a midsection in the vertical direction protrudes toward the occupant.

In this embodiment, the deepest portion 11 of the recessed ridge 10 is positioned near an intermediate portion C (see Fig. 3) in the lateral direction of the airbag cushion 1 in a state in which the airbag cushion 1 is inflated. In the state in which the airbag cushion 1 is inflated, the distal portions 1t of the left chamber 1b and the right chamber 1c are respectively positioned at a substantially same distance from the intermediate portion C. As shown in Fig. 3, when the airbag cushion 1 is inflated, the head portion of the occupant seated on a passenger seat (not shown) at a normal seated position faces the recessed ridge 10.

A depth D (Fig. 3) in the horizontal direction from the distal portions 1t of the left chamber 1b and the right chamber 1c to the deepest portion 11 of the recessed ridge 10 in the state in which the inflation of the airbag cushion 1 is completed is preferably from 20 to 150 mm, more specifically, from 30 to 70 mm. A width W₁ (Fig. 3) between the distal portions 1t, 1t of the left chamber 1b and the right chamber 1c in the state in which the inflation of the airbag cushion 1 is completed is preferably from 100 to 350 mm, more specifically, from 200 to 300 mm.

A panel configuration of the airbag cushion 1 having such an inflation-completed shape will be described later in detail.

The airbag cushion 1 includes opening and closing vents 12, vent flaps 13 as gas bleeding restraining members which restrain bleeding of the gas from the opening and closing vents 12, and tethers 14 as connecting members extending through the interior of the airbag cushion 1 for connecting the face surface 1F and the vent flaps 13 of the airbag cushion 1.

In this embodiment, the opening and closing vents 12 are provided one each on left and right side surfaces of the airbag cushion 1 when inflated. In this embodiment, although the opening and closing vents 12 have a circular opening shape, the opening shape of the opening and closing vents 12 is not limited thereto.

In this embodiment, the vent flaps 13 cover the respective opening and closing vents 12 respectively from the outside of the airbag cushion 1.

The vent flap 13 in this embodiment is formed of a base cloth of a substantially fan shape having one side 13a curved into an arcuate shape curved with a corner portion 13b opposing thereto as a center of curvature as shown in Fig. 2. The lengths of a pair of oblique lines (not designated by reference numerals) extending from both ends of the side 13a toward the corner portion 13b are shorter than the distances between a midsection of the side 13a in the extending direction and the corner portion 13b.

The vent flap 13 is superimposed on the opening and closing vent 12 in a position in which the side 13a is positioned on the face surface 1F side of the airbag cushion 1 with respect to the opening and closing vent 12 and the corner portion 13b is positioned on the opposite side from the face surface 1F with the intermediary of the opening and closing vent 12 and is stitched to a side surface of the airbag cushion 1 by a seam 13c along the side 13a in the state in which the airbag cushion 1 is inflated. The seam 13c also extends so as to curve into an arcuate shape with the corner portion 13b side as a center of curvature.

One end of the tether 14 is continued to the corner portion 13b of the vent flap 13. In this embodiment, the vent flap 13 and the tether 14 are provided separately from each other, and the one end of the tether 14 is stitched to the corner portion 13b of the vent flap 13. Reference numeral 14a designates a seam of the stitch. In this embodiment, as shown in Fig. 2, the one end of the tether 14 is stitched to a surface of the vent flap 13 near the corner portion 13b on the side of the airbag cushion 1. However, the vent flap 13 and the tether 14 may be configured to be integrated continuously by a common base cloth.

In this embodiment, tether insertion ports 15 are provided respectively in the vicinity of the opening and closing vents 12 on the left and right side surfaces of the airbag cushion 1 for communicating the interior and the exterior of the airbag cushion 1.
The tether insertion ports 15 are arranged on the side opposite from the face surface 1F of the airbag cushion 1 with the intermediary of the opening and closing vents 12 in the state in which the airbag cushion 1 is inflated. In this embodiment, although the tether insertion ports 15 have a circular opening shape, the opening shape of the tether insertion ports 15 is not limited thereto.

Midsections of the tethers 14 are inserted into the tether insertion ports 15, and the other ends thereof are arranged in the interior of the airbag cushion 1. The other ends of the tethers 14 are stitched to an inner surface of the recessed ridge 10 of the airbag cushion (that is, an area between the distal portions 1t, 1t in the left chamber 1b and the right chamber 1c) in a position with which the head portion of the occupant seated on the passenger seat with the seat belts (not shown) fastened comes into contact when he or she falls into the airbag cushion 1 upon collision of the vehicle in the state in which the airbag cushion 1 is inflated. The reference numeral 14b designates a seam of the stitch. Hereinafter, portions of the recessed ridge 10 to which the other ends of the tethers 14 are connected are referred to as tether connecting portions 16. A behavior of the occupant upon the collision of the vehicle will be described later in detail.

In the airbag cushion 1, as shown in Fig. 2, the tether connecting portion 16 is arranged at a position of the recessed ridge 10 with which the head portion, more preferably, the chin portion of a small size occupant seated on the passenger seat with the seat belts fastened comes into contact when he or she falls into the airbag cushion 1 upon collision of the vehicle in the state in which the airbag cushion 1 is inflated.

As shown in Fig. 3, the tether connecting portions 16 are preferably arranged in a range W₂ from 0 to 80mm, more specifically, from 10 to 50 mm to the left and right from the deepest portion 11 of the recessed ridge 10, that is, from the center portion of the recessed ridge 10 in the lateral direction in the state in which the airbag cushion 1 is inflated.

In this embodiment, although the left tether 14 which continues from the vent flap 13 on the left side surface of the airbag cushion 1 and the right tether 14 which continues from the vent flap 13 on the right side surface thereof are connected to positions slightly apart from each other in the left and right direction from the deepest portion 11 of the recessed ridge 10 respectively, they may be connected to the deepest portion 11. The tethers 14 may be connected to each other by being connected to the recessed ridge 10 at a distance in the lateral direction as shown in the drawing, and may also be connected to the same position. The tethers 14 may be connected to the recessed ridge 10 at positions shifted in the vertical direction.

The panel configuration of the airbag cushion 1 is as follows.

The airbag cushion 1 includes left and right outside panels 21 and left and right inside panels 22. The respective panels 21, 22 are formed of woven cloths coated with a synthetic resin.

The outside panels 21 constitute outwardly faced left and right surfaces of the airbag cushion 1 and portions extending from an upper surface to a bottom surface of the gas receiving chamber 1a. Portions of the outside panels 21 which constitute the outwardly faced left and right surfaces of the airbag cushion 1 are provided with the opening and closing vents 12 and the tether insertion ports 15, and a portion which constitutes the bottom surface of the gas receiving chamber 1a is provided with the gas receiving chamber 1d and a mounting portion (not shown) for mounting the airbag cushion into the case 2. The inside panels 22 constitute surfaces extending to the recessed ridge 10 of the airbag cushion 1. The outside panels 21 and the inside panels 22 are stitched to each other by stitched seams 23.

The vent flaps 13 are stitched to the outer surfaces of the respective outside panels 21. The other ends of the tethers 14 are stitched to inner side surfaces of the respective inside panels 22.

In this embodiment, when folding the airbag cushion 1, the airbag cushion 1 is folded in advance in a state in which the respective tethers 14 are pulled inwardly of the airbag cushion 1 so that the respective vent flaps 13 are superimposed over the respective opening and closing vents 12 and the respective tethers 14 extend without slackness between the respective corner portions 13b of the vent flap 13 and the respective tether insertion ports 15. By folding in this manner, the respective opening and closing vents 12 assume a state of being closed by the vent flaps 13 from the start of inflation of the airbag cushion 1 when the airbag cushion is inflated. A method of folding the airbag cushion 1 is arbitrary, and the method of folding the airbag cushion 1 is not limited thereto.

Subsequently, an operation of an airbag apparatus S having the airbag cushion 1 configured as described above will be described.

Upon collision of the vehicle on which the passenger airbag apparatus S is mounted, the inflator is activated to inject gas, and the airbag cushion 1 starts to be inflated by the gas from the inflator. The airbag cushion 1 opens the lids and and is inflated and deployed from the upper surface of the instrument panel 4 toward the occupant on the passenger seat.

In this embodiment, since the airbag cushion 1 is folded in the state in which the vent flaps 13 covers the opening and closing vents 12 in advance, the opening and closing vents 12 of the airbag cushion 1 is closed by the vent flaps 13 from the beginning of the inflation, and hence bleeding of the gas from the opening and closing vents 12 is restrained. Accordingly, the airbag cushion 1 is inflated quickly.

In association of the expansion of the face surface 1F toward the occupant according to the expansion of the airbag cushion 1, the tethers 14 are pulled inwardly of the airbag cushion 1, and the corner portions 13b of the vent flaps 13 are pulled in the direction away from the sides 13a via the tether 14. Accordingly, the vent flaps 13 are tensed along the side surfaces of the airbag cushion 1, so that the vent flaps 13 are not moved away from the opening and closing vents 12 even when the internal pressure of the airbag cushion 1 is increased. Accordingly, the opening and closing vents 12 are kept in a closed state by the vent flaps 13 until the occupant on the passenger seat comes into contact with the face surface 1F of the inflated airbag cushion 1, so that the interior of the airbag cushion 1 is maintained at a high internal pressure.

Subsequently, in a case where the occupant comes into contact with the face surface 1F of the inflated airbag cushion 1, and the tether connecting portion 16 of the recessed ridge 10 of the face surface 1F is pushed backward toward the interior of the airbag cushion, the tethers 14 are loosened, and the vent flaps 13 come away from the opening and closing vents 12 by the gas pressure in the interior of the airbag cushion 1, so that the opening and closing vents 12 are opened. Consequently, the gas bleeds to the outside of the airbag cushion 1 from the opening and closing vents 12 and the occupant is softly received by the airbag cushion 1.

In this case, a left chest of the occupant is received by the inflated left chamber 1b, and a right chest of the occupant is received by the inflated right chamber 1c, and the head portion is received by being entered into the recessed ridge 10 therebetween.

When the occupant has a small size, since a kinetic energy of the occupant upon collision of the vehicle is relatively small, so that the opening and closing vents 12 are preferably released in a relatively early stage to allow the gas to bleed out of the airbag cushion 1. In contrast, when the occupant has a large size, since the kinetic energy upon collision of the vehicle is relatively large, so that the timing to release the opening and closing vents 12 is preferably delayed by the case where the occupant has the small size to maintain the internal pressure in the airbag cushion 1 at a high level for a relatively long time.

In the airbag cushion 1, the tethers 14 are connected to a position of the recessed ridge 10 where the small size occupant seated on the passenger seat with the seat belts fastened, that is, the AF05 type occupant dummy comes into contact with when he or she falls into the airbag cushion 1 upon collision of the vehicle in the state in which the airbag cushion 1 is inflated. When the occupant is seated on the passenger seat with the seat belts (not shown) fastened, the occupant is constrained at the lumbar part from moving forward by the lap belt (not shown) upon collision of the vehicle as indicated by a double-dashed chain line in Fig. 2, the upper half body of the occupant moves forward as if it falls to the front about a portion around the lumbar part as an axis. Therefore, the head portion of the occupant comes into contact with the inflated airbag cushion 1 in a relatively early stage in comparison with other parts. Therefore, when the small size occupant seated on the passenger seat with the seat belts fastened falls into the inflated airbag cushion 1, the head portion of the occupant comes into contact with the tether connecting portions 16 of the recessed ridge 10 in an early stage to move the same backward, and hence the opening and closing vents 12 are released in an early stage.

In this embodiment, the tether connecting portions 16 are arranged at a position of the recessed ridge 10 where the head portion of the small size occupant seated on the passenger seat with the seat belts fastened comes into contact with when he or she falls into the airbag cushion 1 upon collision of the vehicle in a state in which the airbag cushion 1 is inflated, and are positioned in the range W₂ of 30 mm to the left and right from the center portion of the recessed ridge 10 in the lateral direction, so that the tether connecting portions 16 are moved backward quickly and the opening and closing vents 12 are released when the head portion of the small size occupant comes into contact with the recessed ridge 10.

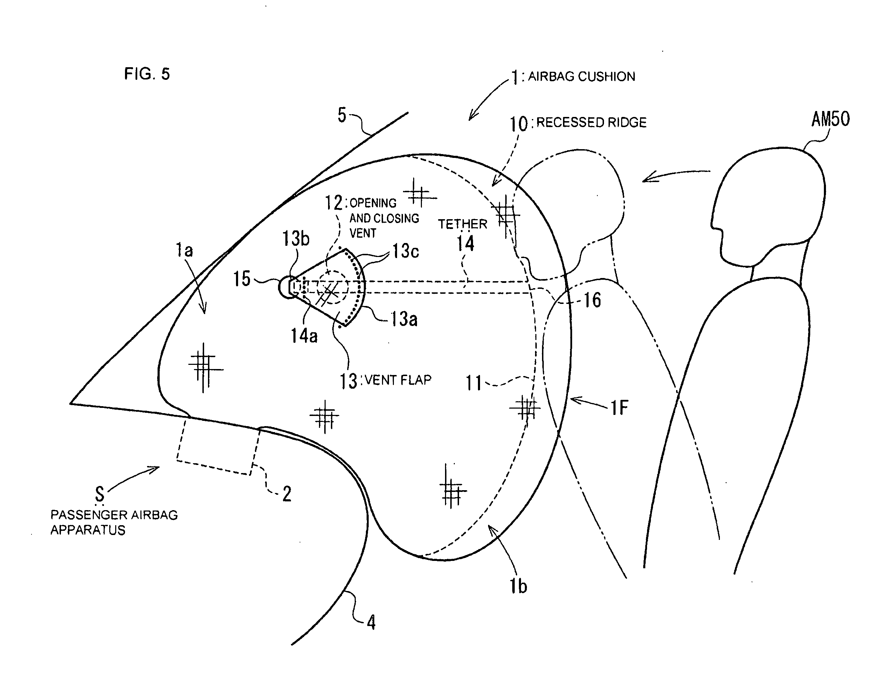

When the large size occupant seated on the passenger seat with the seat belts fastened, that is, the AM50 type occupant dummy in this embodiment falls into the inflated airbag cushion 1, as shown by a double-dashed chain line in Fig. 5, the tether connecting portions 16 of the recessed ridge 10 faces a portion near the lower chest portion rather than the head portion of this occupant, so that the head portion of this occupant comes into contact with the recessed ridge 10 above the tether connecting portions 16. Therefore, even when the head portion of the occupant, presses the recessed ridge 10, the timing when the tether connecting portions 16 starts to move backward is delayed in comparison with the case where it is pressed directly by the head portion of the small size occupant, and the amount of backward movement is also small. Accordingly, the opening and closing vents 12 are released later than the case where the of the airbag cushion 1 receives the small size occupant, and the amount of release is also small, so that the internal pressure in the airbag cushion 1 is maintained at a high level for a relatively long time and hence the occupant is stably received.

When the occupant is not fastened with the seat belts, even though the occupant has the small size, the kinetic energy is large, and hence the timing of release of the opening and closing vents 12 is preferably delayed to maintain the internal pressure in the airbag cushion 1 at a high level over a relatively long time.

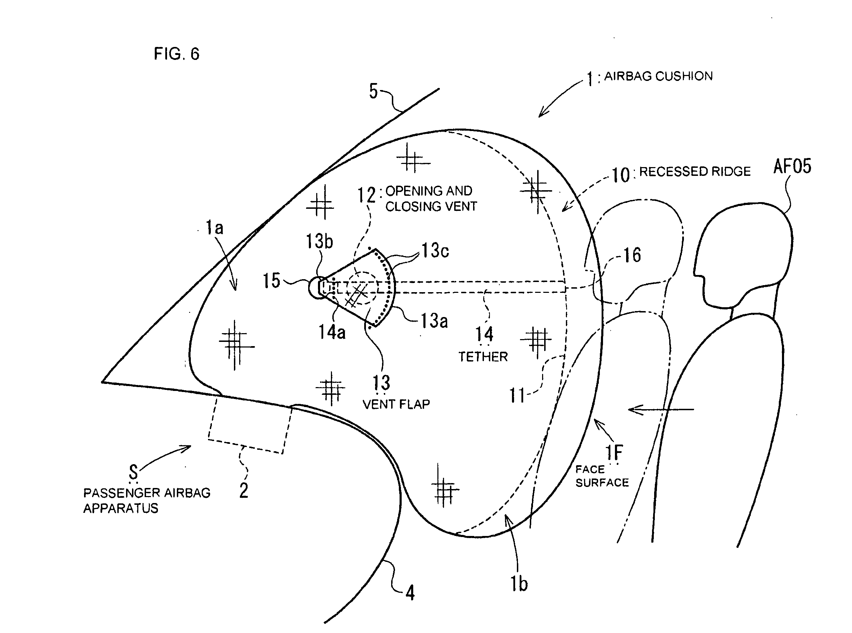

When the occupant is not fastened with the seat belts, since the forward movement of the lumbar part of the occupant is not constrained by the lap belt upon collision of the vehicle, the occupant is translated forward with little bending of the upper half body toward the front as indicated by a double-dashed chain line in Fig. 6. Therefore, even though the occupant has the small size, the head portion of the occupant comes into contact with the recessed ridge 10 above the tether connecting portions 16 of the inflated airbag cushion 1. Therefore, in this case as well, when the head portion of the occupant comes into contact with the face surface 1F of the airbag cushion 1, the opening and closing vents 12 are not opened or largely opened immediately, and the internal pressure of the airbag cushion is maintained relatively at a high level for a relatively long time. Accordingly, even though the occupant has the small size, when the occupant is not fastened with the seat belts, the internal pressure of the airbag cushion 1 is maintained at a high level for a relatively long time, so that the occupant is stably received.

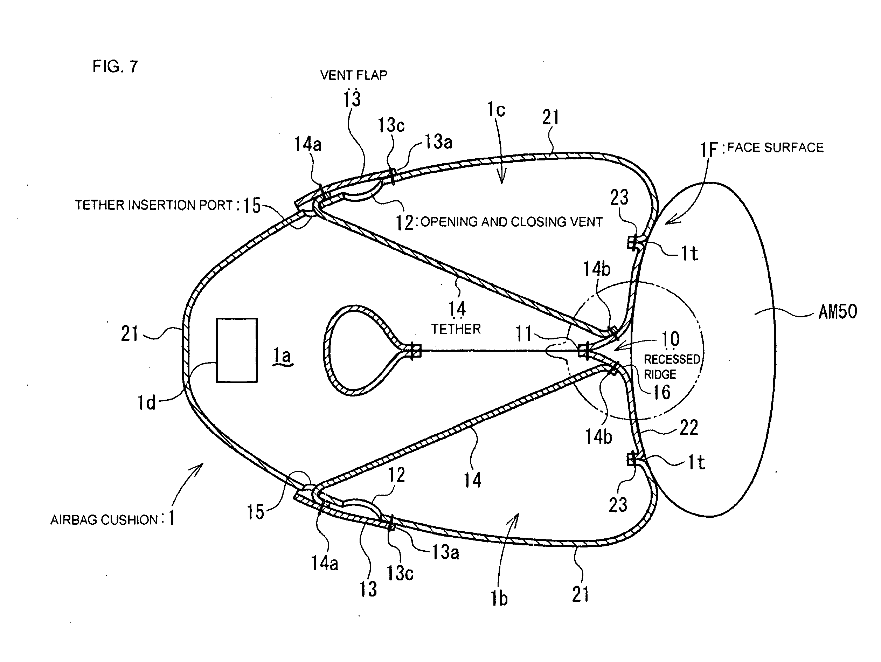

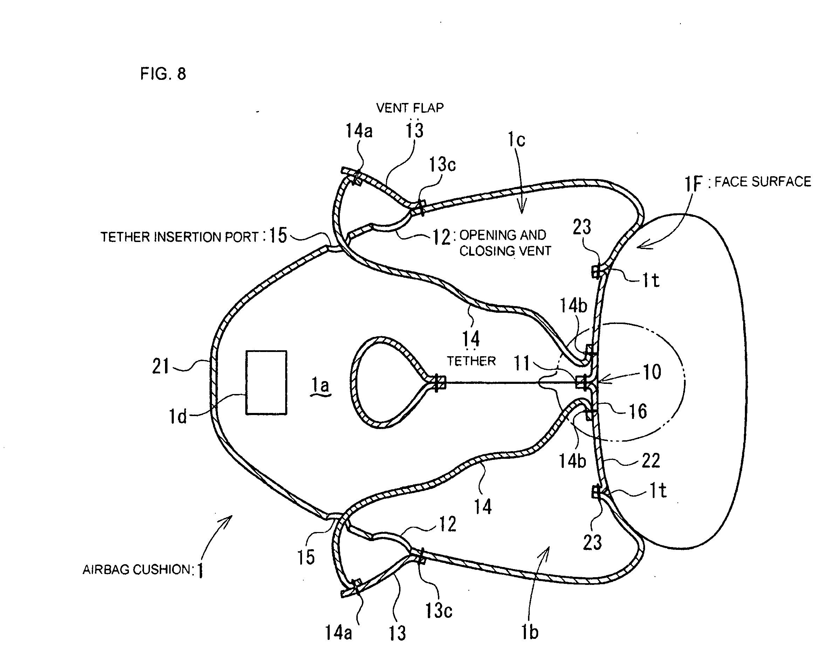

When the occupant is not fastened with the seat belts in this manner, since the occupant is translated forward with little bending of the upper half body toward the front, and hence the portion of the occupant near the chest portion comes into contact with the face surface 1F of the inflated airbag cushion 1 in a relatively early stage. In this airbag cushion 1, when the occupant has the large size, the tether connecting portions 16 face the chest portion of the occupant when the airbag cushion is inflated. Therefore, at the level of the tether connecting portions 16, as shown in Fig. 7, the portion or the occupant near the chest portions is received by the left chamber 1b and the right chamber 1c in the inflated state. Therefore, since the tether connecting portions 16 are positioned inside the recessed ridge 10, the tether connecting portions 16 are not pressed by the portion near the chest portion as well immediately after the portion of the occupant near the chest portion comes into contact with the airbag cushion 1. Subsequently, as shown in Fig. 8, when the portion of the occupant near the chest portion moves the distal portions 1t of the left chamber 1b and the right chamber 1c backward inwardly of the airbag cushion to the same level as the deepest portion 11 of the recessed ridge 10, the tether connecting portions 16 come into contact with the portion near the chest portion and are moved backward inwardly of the airbag cushion. Accordingly, the tether connecting portions 16 are not pressed immediately after the occupant comes into contact with the face surface 1F, and the opening and closing vents 12 release behind time after the portion of the occupant near the chest portion comes into contact with the face surface 1F. so that the internal pressure of the airbag cushion 1 is maintained at a high level for a relatively long time and the occupant is stably received.

### [Comparative Experiment]

The connecting position of the tether 14 to the recessed ridge3 in a state in which the airbag cushion 1 was inflated was changed as follows, and head portion injury values when the inflated airbag cushion 1 received the occupant were measured.

Embodiment 1: The tethers 14 were connected to positions of the recessed ridge 10 where the chin portion of the AF05 type occupant dummy seated on the passenger seat with the seat belts fastened came into contact with when it fell into the airbag cushion 1 in the state in which the airbag cushion 1 was inflated.

Comparative Example 1: The tethers 14 were connected to positions of the recessed ridge 10 lower than that in Embodiment 1 by 80 mm in the state in which the airbag cushion 1 was inflated.

Comparative Example 2: The tethers 14 were connected to positions of the recessed ridge 10 lower than that in Embodiment 1 by 160 mm in the state in which the airbag cushion 1 was inflated.

In any of Embodiment 1, Comparative Examples 1 and 2, the tethers 14 were connected to the positions near the center portion (deepest portion 11) of the recessed ridge 10 in the lateral direction in the state in which the airbag cushion 1 was inflated.

About Embodiment 1, Comparative Examples 1 and 2, a vehicle collision experiment was conducted in the following cases 1 to 4, and head injury values were measured.
Case 1: The AF05 type dummy was used as the occupant, and the vehicle was caused to collide in the state in which the seat belts were fastened.
Case 2: The AF05 type dummy was used as the occupant, and the vehicle was caused to collide in the state in which the seat belts were not fastened.
Case 3: The AM50 type dummy was used as the occupant, and the vehicle was caused to collide in the state in which the seat belts were fastened.
Case 4: The AM50 type dummy was used as the occupant, and the vehicle was caused to collide in the state in which the seat belts were not fastened.

**[Table 1]**

| | Embodiment 1 | Comparative Example 1 | comparative Example 2 |
|---|---|---|---|
| case 1 | very good | very good | good |
| case 2 | very good | very good | very good |
| case 3 | very good | good | good |
| case 4 | very good | very good | very god |

As is apparent from Table 1, in Embodiment 1, very good occupant protecting performance was demonstrated in all of cases 1 to 4.

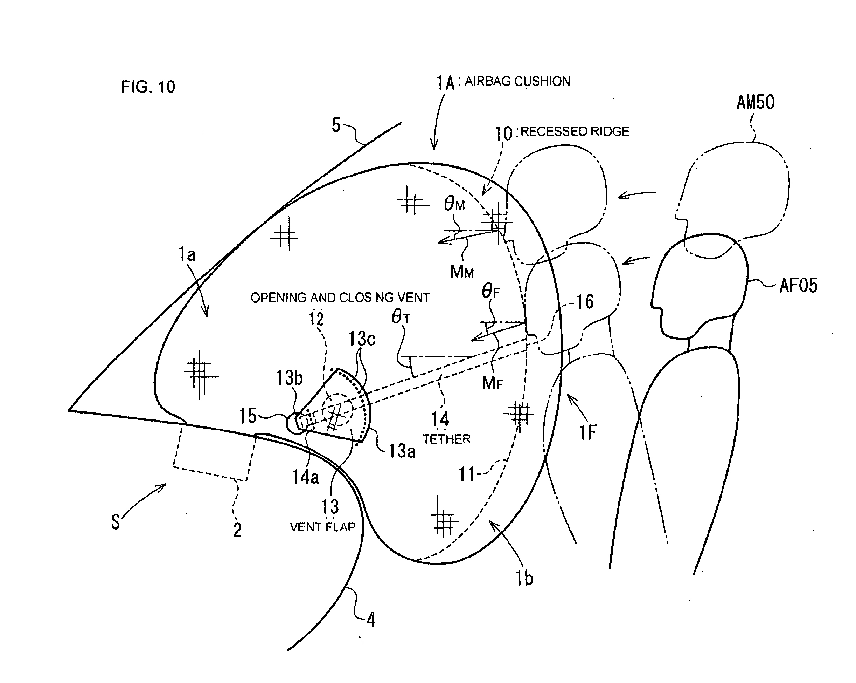

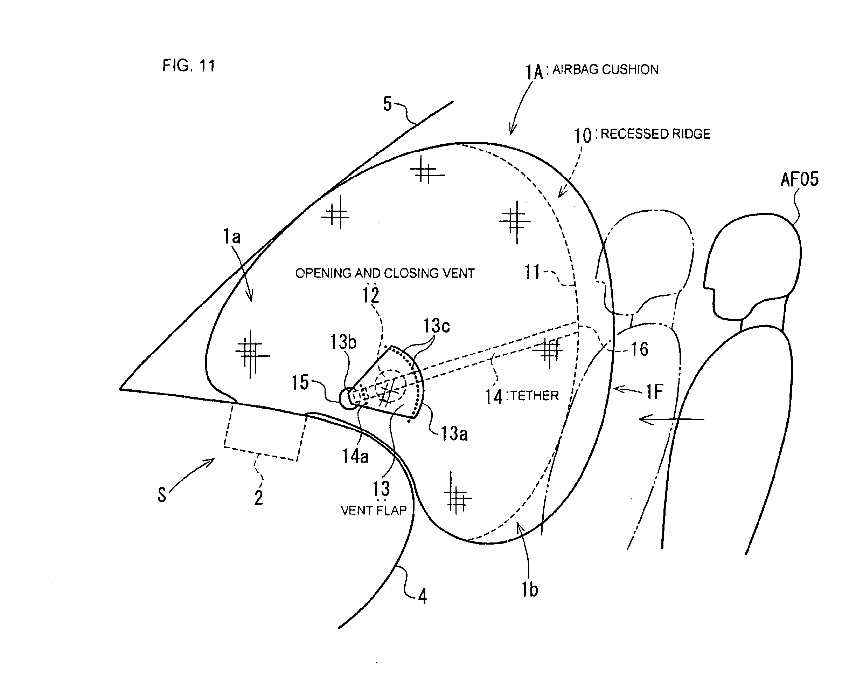

Figs. 10 and 11 are side views of the airbag cushion and the airbag apparatus according to another embodiment. Fig. 10 shows a behavior of the occupant when the seat belts are fastened, and Fig. 11 shows a behavior when the occupant is not fastened with the seat belts.

In an airbag cushion 1A in this embodiment, the tethers 14 extend obliquely so as to be lower as they go away from the face surface 1F (recessed ridge 10) in the state in which the airbag cushion 1A is inflated.

As shown in Fig. 10, an angle θ_{T} of the direction of extension of the tether 14 with respect to the horizontal direction when the airbag cushion is inflated is substantially parallel to an angle θ_{F} of a direction of movement M_{F} of the head portion of the AF05 type dummy fastened with the seat belts with respect to the horizontal direction when it falls into the inflated airbag cushion 1A and the head portion thereof comes into contact with the recessed ridge 10. More specifically, the angle θ_{T} of the direction of extension of the tether 14 with respect to the horizontal direction when the airbag cushion is inflated is preferably from 0 to 50°, more specifically, from 15 to 45°.

Other configurations of the airbag cushion 1A are the same as those of the airbag cushion 1 shown in Figs. 1 to 8, and same reference numerals as in Figs. 1 to 8 designate the same parts in Figs. 10, 11.

In the airbag cushion 1A configured in this manner, in the state in which the airbag cushion 1A is inflated, when the tether connecting portions 16 of the recessed ridge 10 are moved backward in parallel to the direction of extension of the tethers 14, the amounts of slackness of the tethers 14 become maximum in comparison with the case in which the tether connecting portions 16 are moved backward in the direction closer to the horizontal direction than that and closer to the vertical direction than that.

In other words, in the airbag cushion 1A, when the AF05 type dummy fastened with the seat belts falls into the inflated airbag cushion 1A, the head portion of the occupant comes into contact with the tether connecting portions 16 in an early stage, and the head portion of the occupant causes the tether connecting portions 16 to move backward in substantially parallel to the direction of extension of the tethers 14, so that the opening and closing vents 12 are released quickly to assume large openings as shown in Fig. 10.

As shown in Fig. 10, an angle θ_{M} of a direction of movement M_{M} of the head portion at the time point when the AM50 type dummy fastened with the seat belts falls into the inflated airbag cushion 1A and the head portion thereof comes into contact with the recessed ridge 10 with respect the horizontal direction is generally smaller than the angle θ_{T} of the tether 14 described above.

Therefore, in the airbag cushion 1A, when the AM50 type dummy fastened with the seat belts falls into the inflated airbag cushion 1A, as shown in Fig. 10, the head portion thereof comes into contact with the recessed ridge 10 at a portion above the tether connecting portions 16, and the contact portion is moved backward at the angle θ_{M} which is smaller than the angle θ_{T} of the tethers 14, so that the opening and closing vents 12 are released behind time and the openings of the opening and closing vents 12 are small in comparison with the case in which the inflated airbag cushion 1A receives the AF05 type dummy fastened with the seat belts. Accordingly, the internal pressure in the airbag cushion 1A is maintained at a high level for a relatively long time, and the occupant is stably received.

When the occupant is not fastened with the seat belts, as shown in Fig. 11, the occupant moves forward with little bending toward the front upon collision of the vehicle. Therefore, when this occupant comes into contact with the face surface 1F of the inflated airbag cushion 1A, the face surface 1F is pressed by the occupant in the substantially horizontal direction. Therefore, in this case as well, in the same manner as the case where the AM50 type dummy fastened with the seat belts described above is received, the opening and closing vents 12 are released behind time and the openings of the opening and closing vents 12 are small in comparison with the case where the AF05 type dummy fastened with the seat belts are received. Accordingly, the internal pressure in the airbag cushion 1A is maintained at a high level for a relatively long time, and the occupant is stably received.

In this case, when the occupant who is not fastened with the seat belts has the large size, since the position with which the head portion comes into contact is shifted further upward from the tether connecting portions 16, the timing to release the opening and closing vents 12 is delayed and the openings of the opening and closing vents 12 are small in comparison with the case in which the occupant who is not fastened with the seat belts has the small size. Accordingly, since the internal pressure in the airbag cushion 1A is maintained at a high level for a further long time, the occupant is stably received even when the occupant is the large size occupant who is not fastened with the seat belts, which has a very large kinetic energy.

In the airbag cushions 1, 1A in the embodiments described above, the center portion of the face surface 1F in the lateral direction is adapted to assume the recessed ridge 10 recessed inwardly of the airbag cushion when the airbag cushion is inflated by stitching the inside panels 22, 22 which continue to the recessed ridge 10 so as to be recessed inwardly of the airbag cushion. However, a method of causing a head-faced portion of the face surface to be recessed when the airbag cushion is inflated is not limited thereto.

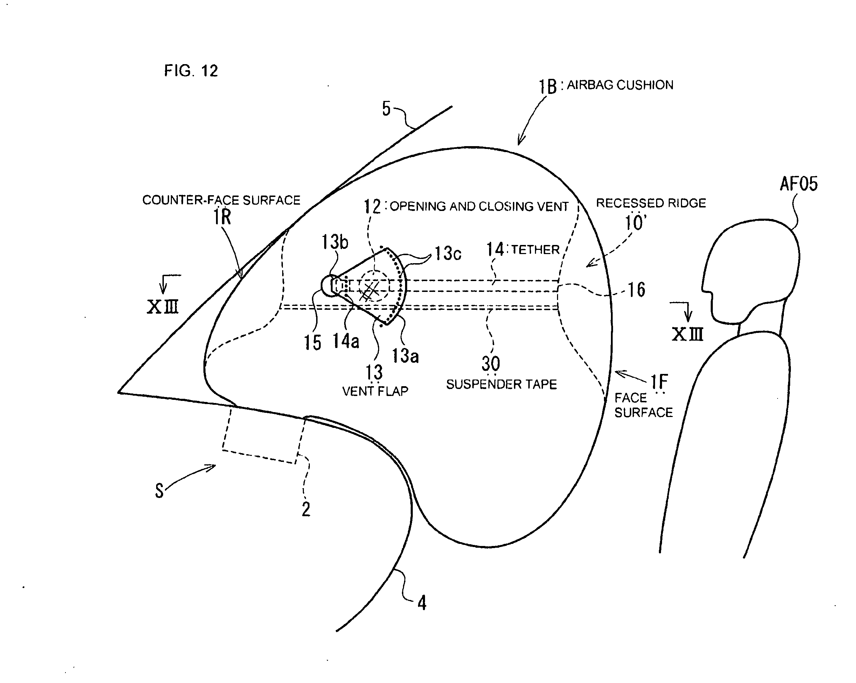

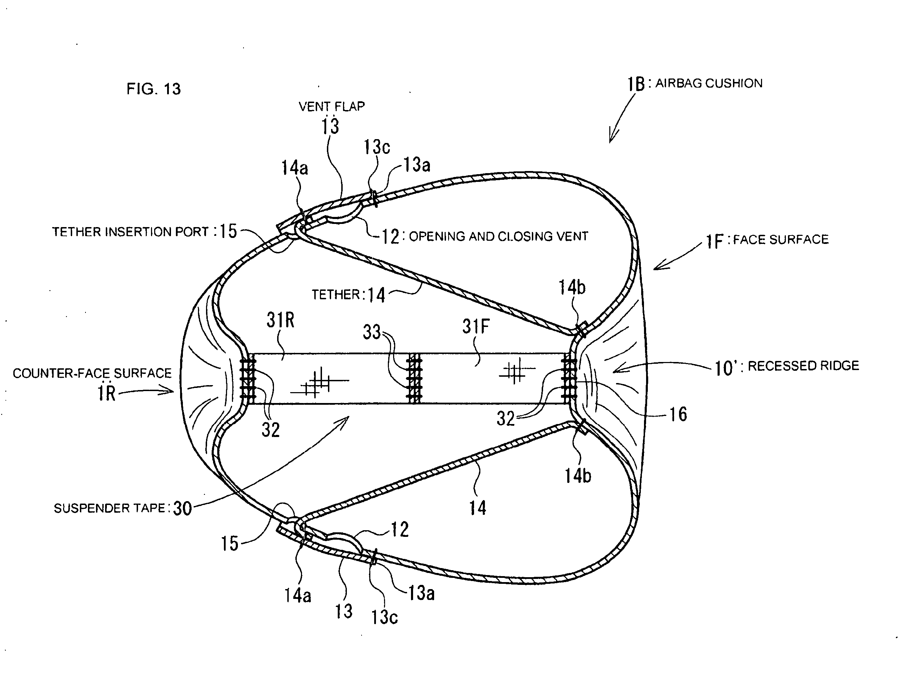

Another configuration of the airbag cushion in which the recessed ridge is formed on the face surface when inflated will be shown in Figs. 12 and 13. Fig. 12 is a side view of the airbag cushion and the airbag apparatus according to another embodiment, and Fig. 13 is a cross-sectional view taken along the line XIII-XIII in Fig. 12.

In an airbag cushion 1B in this embodiment, a suspender tape 30 which connects the face surface 1F and a counter-face surface 1R on the opposite side is provided inside the airbag cushion 1B.

An end portion of the suspender tape 30 on the side of the face surface 1F is joined to the face surface 1F near the center in the lateral direction at a level opposing the head portion of the AF05 type dummy when the airbag cushion is inflated stitching or the like. Accordingly, in a state in which the airbag cushion 1B is inflated, an area of the face surface 1F which faces the head portion of the AF05 type dummy corresponds to a recessed ridge 10' which is recessed inwardly of the airbag cushion, and hence both left and right sides thereof protrude toward the occupant with respect to the recessed ridge 10'. Reference numeral 32 designates seams whereby both ends of the suspender tape 30 are stitched to the face surface 1F and the counter-face surface 1R respectively.

In this embodiment, the suspender tape 30 is formed of band-shaped base cloths separate for the face surface 1F side and the counter-face surface 1R side from a midsection in the longitudinal direction thereof, in which these base cloths are connected so that the suspender tape 30 achieves a predetermined length. Reference numeral 33 designates a seam which connects these base cloths.

Other configurations of the airbag cushion 1B are the same as the airbag cushion 1 shown in Figs. 1 to 8.

Even with the airbag cushion 1B, the same effects and advantages as in the airbag cushion 1 in Figs, 1 to 8 are achieved.

The embodiments described above are only examples of the present invention, and the present invention is not limited to the embodiments described above.

For example, in the respective embodiments described above, although the opening and closing vents are provided on each for the left and right side surfaces of the airbag cushion, two or more each of the opening and closing vents may be provided for each of the side surfaces.

In the respective embodiments described above, the vent flaps which cover the opening and closing vents from the outside of the airbag cushions are provided as the gas bleeding restraining members for restraining the bleeding of the gas from the opening and closing vents. However, the configuration of the gas bleeding restraining member is not limited thereto.

In the respective embodiments described above, a constantly opened vent which constantly communicates the interior and the exterior of the airbag cushion may be provided.

In the respective embodiments described above, the vent flap is configured to close the entire part of the opening and closing vent. However, it may be configured to bring the opening and closing vent from the large opening to the small opening. For example, it may be configured in such a manner that the opening and closing vent is partly protruded from the vent flap and the protruded portion allows the gas to bleed therefrom even when the vent flap is overlapped with the opening and closing vent. Alternatively, a configuration in which a hole of a smaller diameter than the opening and closing vent is provided at a position of the vent flap overlapped with the opening and closing vent, and the gas is allowed to bleed via this hole even when the opening and closing vent is closed is also applicable.

In the respective embodiments described above, the respective vents are substantially circular openings. However, the shapes of the respective vents are not limited thereto, and may be shapes other than the circular shape, for example, a slit-shape.

## Claims

1. A car comprising an airbag cushion (1) which comprises:
a) opening and closing vents (12) configured to be opened and closed preferably by vent flaps (13) and provided on left and right side surfaces of the airbag cushion (1),
b) tethers (14), the one ends thereof being connected to the vent flaps (13), wherein midsections of the tethers (14) are inverted into tether insertion ports (15) provided respectively in the vicinity of the opening and closing vents (12) on the left and right side surfaces of the airbag cushion 1 for comnunicating the interior and the exterior of the airbag cushion (1),
c) a face surface (1F) of the airbag cushion (1) provided in the interior of the airbag cushion (1) and configured to come into contact with an occupant seated on the passenger seat when the airbag cushion (1) is inflated, and
d) a head-faced portion of the face surface (1F) cf the inflated airbag cushion (1) facing a head portion of an accupant,
wherein ,
e) the airbag cushion (1) is configured in such a manner that the opening and closing vents (12) are closed until an occupant comes into contact with the face surface (1F) cf the inflated airbag cushion (1),
f) at least the head-faced portion of the face surface (1F) of the airbag corresponds to a recessed ridge (10; 10'.) which is recessed toward a counter-occupant direction with respect to the periphery thereof in a state in which the inflation is completed,
**characterized in that** the head portion is the portion of a small sized occupant corresponding to an AF05 dummy when the airbag cushion (1) is inflated,
g) the other ends of the tethers (14) are stitched to an inner surface of the recessed ridge (10; 10') of the airbag cushion (1) at tether connecting portions (16) in a position in which the head portion of the small-sized occupant corresponding to an AF05 dummy seated on the passenger seat with the seat belts fastened comes into contact when the occupant falls into the airbag cushion (1) upon collision of the vehicle in the state in which the airbag cushion (1) is inflated, and **in that**,
h) when in the inflated stage of the airbag cushion (1) the head portion of the occupant seated on the passenger seat with the seat belts fastened comes into contact with the head-faced portion, the direction of extension of the tether (14) is parallel to the direction of movement (M_{F}) in which the head-faced portion is pressed by the head portion of the occupant and the opening and closing vents (12) are opened or brought into a large opening, and
i) when in the inflated stage of the airbag cushion (1) the head portion of the occupant seated on the passenger seat with the seat belts fastened contacts the face surface (1F) away from the head-faced portion, the direction of extension of the tether (14) is not parallel to the direction of movement (M_{M}) in which the head-faced portion is pressed by the head portion of the occupant and the opening and closing vents (12) are not opened or brought into a small opening.

2. The car according to claim 1,
wherein, when the airbag cushion (1) is inflated, an angle (θ_{T}) between the direction of extension of the tether (14) and a horizontal direction
is substantially equal to an angle (θ_{T}) between a direction of movement (M_{F}) of the head portion of an AF05 type dummy which contacts the head-faced portion of the face surface (1F), and the horizontal direction, and
is larger than an angle (θ_{M}) between a direction of movement (M_{M}) of the head portion of an AM50 type dummy which contacts the face surface (1F) above the head-faced portion, and the horizontal direction.

3. The car according to claims 1 or 2, wherein
the vent flaps are provided as a gas bleeding restraining member (13) configured to restrain gas from bleeding from the opening and closing vent (12) and
to open the opening and closing vent (12) or bring the same into the large opening when the head-faced portion of the face surface (1F) of the inflated airbag cushion (1) facing the head portion of the occupant is moved backward in the direction opposite from the occupant, and
a connecting member (14) is configured to connect the gas bleeding restraining member (13) and the head-faced portion, wherein
the connecting member (14) is tensed between the head-faced portion and the gas bleeding restraining member (13) when the occupant's head does not come into contact with the head-faced portion in a state in which the airbag cushion (1) is inflated and whereby a tensile force is applied to the gas bleeding restraining member (13) to close the opening and
closing vent (12) or bring the same into the small opening, and
the connecting member (14) is loosened when the occupant's head comes into contact with the head-faced portion of the inflated airbag cushion (1), whereby the head-faced portion is moved backward, whereby the tensile force is reduced and the opening and closing vent (12) is opened or brought into the large opening.

4. The car according to Claim 1, 2 or 3 wherein the occupant is an AF05 type dummy.

5. The car according to any one of Claims 1 to 4, wherein
the gas bleeding restraining member (13) closes the opening and closing vent (12) or brings the same into the small opening when a tensile force is applied inwardly of the airbag cushion (1) and opens the opening and closing vent (12) or brings the same into the large opening when the tensile force is reduced.

6. The car according to Claim 3, wherein
the connecting member (14) extends in substantially parallel to the direction (M_{F}) in which the head-faced portion is pressed from the head portion when the head portion of the occupant comes into contact with the head-faced portion when viewing the airbag from the left and right of the occupant in a state in which the airbag cushion (1) is inflated.

7. The car according to Claim 6, wherein
the connecting member (14) extends substantially horizontally or in the direction to be lowered as it goes away from the head-faced portion in the state in which the airbag cushion (1) is inflated.

8. The car according to Claim 7, wherein
the angle (θ_{T}) of the direction of extension of the connecting member (14) with respect to the horizontal direction is from 0 to 50[deg.] in the state in which the airbag cushion (1) is inflated.

9. The car according to any one of Claims 5 to 8, wherein
the connecting member (14) is continued to a range from 0 to 80 mm from a center of the head-faced portion in the lateral direction to the left and right in the head-faced portion in the state in which the airbag cushion (1) is inflated.

10. The car according to any one of Claims 5 to 9, wherein
the gas bleeding restraining member is a vent flap (13) which covers the opening and closing vent (12),
the connecting member (14) is tensed between the head-faced portion and the vent flap (13) when the airbag cushion (1) is inflated, whereby the movement of the vent flap (13) outwardly of the airbag cushion (1) is prohibited, and
the connecting member (14) is loosened when the vent flap (13) is overlapped with the opening and closing vent (12) to close the opening and closing vent (12) or bring the same into the small opening and the occupant comes into contact with the head-faced portion of the inflated airbag cushion (1), whereby the head-faced portion is moved backward, so that the vent flap (13) is moved away from the opening and closing vent (12) by a gas pressure in the interior of the airbag cushion (1) and the opening and closing vent (12) is opened or brought into the large opening.

11. The car according to any one of Claims 1 to 10, comprising an inflator configured to inflate the airbag cushion (1).

## Patentansprüche

1. Fahrzeug mit einem Airbagkissen (1), aufweisend:
a) Öffnungs- und Schließdurchlässe (12), die so ausgebildet sind, dass sie vorzugsweise mittels Entlüftungsklappen (13) geöffnet oder geschlossen werden und an linken und rechten Oberflächen des Airbagkissens (1) vorgesehen sind,
b) Spannbänder (14), deren eine Enden mit den Entlüftungsklappen (13) verbunden sind, wobei Mittenabschnitte der Spannbänder (14) in Spannband-Einführöffnungen (15) eingesetzt sind, die jeweils in der Nähe der Öffnungs- und Schließdurchlässe (12) an den linken und rechten Oberflächen des Airbagkissens (1) für das Zusammenwirken von Innenraum und Außenraum des Airbagkissens (1) vorgesehen sind,
c) eine Stirnfläche (1F) des Airbagkissens (1), die im Innenbereich des Airbagkissens (1) vorgesehen und so ausgebildet ist, dass sie mit dem auf dem Fahrgastsitz sitzenden Insassen in Kontakt kommt, wenn das Airbagkissen (1) aufgeblasen ist, und
d) einen kopfseitigen Abschnitt der Stirnfläche (1F) des aufgeblasenen Airbagkissens (1), der einem Kopfbereich eines Insassen zugewandt ist,
wobei
e) das Airbagkissen (1) so ausgebildet ist, dass die Öffnungs- und Schließdurchlässe (12) geschlossen sind bis ein Insasse in Kontakt mit der Stirnfläche (1F) des aufgeblasenen Airbagkissens (1) kommt,
f) mindestens der kopfseitige Abschnitt der Stirnfläche (1F) des Airbags einer eingelassenen Rinne (10; 10') entspricht, die im vollständig aufgeblasenen Zustand in einer gegenüber seinem Umfangsbereich zum Insassen entgegengesetzten Richtung eingelassen ist,
**dadurch gekennzeichnet, dass** der Kopfbereich der Bereich eines kleinen Insassen ist, der einem AF05-Dummy bei aufgeblasenem Airbagkissen (1) entspricht,
g) die anderen Enden der Zugbänder (14) an eine Innenfläche der eingelassenen Rinne (10; 10`) des Airbagkissens (1) an Zugbandverbindungsabschnitte (16) angenäht sind, an einer Position, an der der Kopfbereich des kleinen, einem AF05-Dummy entsprechenden mit umgelegtem Sicherheitsgurt auf dem Fahrgastsitz sitzenden Insassen in Kontakt kommt, wenn der Insasse bei aufgeblasenem Airbagkissen (1) nach einer Kollision des Fahrzeugs in das Airbagkissen (1) fällt,
und dass
h) wenn bei aufgeblasenem Airbagkissen (1) der Kopfbereich des mit umgelegtem Sicherheitsgurt auf dem Fahrgastsitz sitzenden Insassen in Kontakt mit dem kopfseitigen Abschnitt kommt, die Erstreckungsrichtung der Zugbänder (14) parallel zur Bewegungsrichtung (M_{F}) verläuft, in der durch den Kopfbereich des Insassen Druck auf den kopfseitigen Abschnitt ausgeübt wird, und die Öffnungs- und Schließdurchlässe (12) geöffnet werden oder deren große Öffnung herbeigeführt wird, und
i) wenn bei aufgeblasenem Airbagkissen (1) der Kopfbereich des mit umgelegtem Sicherheitsgurt auf dem Fahrgastsitz sitzenden Insassen abseits vom kopfseitigen Abschnitt auf die Stirnfläche (1F) trifft, die Erstreckungsrichtung der Zugbänder (14) nicht parallel zur Bewegungsrichtung (M_{F}) verläuft, in der durch den Kopfbereich des Insassen Druck auf den kopfseitigen Abschnitt ausgeübt wird, und die Öffnungs- und Schließdurchlässe (12) nicht geöffnet werden oder deren kleine Öffnung herbeigeführt wird.

2. Fahrzeug nach Anspruch 1,
wobei bei aufgeblasenem Airbagkissen (1) ein Winkel (θ_{T}) zwischen der Erstreckungsrichtung der Zugbänder (14) und einer Horizontalen
im Wesentlichen gleich einem Winkel (θ_{F}) zwischen einer Bewegungsrichtung (M_{F}) des Kopfbereichs eines AF05-Dummy-Typs, der auf den kopfseitigen Abschnitt der Stirnfläche (1F) trifft, und der Horizontalen ist, und
größer als ein Winkel (θ_{M}) zwischen der Bewegungsrichtung (M_{M}) des Kopfbereichs eines AM50-Dummy-Typs, der oberhalb des kopfseitigen Abschnitts auf die Stirnfläche (1F) trifft, und der Horizontalen ist.

3. Fahrzeug nach Anspruch 1 oder 2, wobei
die Entlüftungsklappen als ein die Gasentlüftung beschränkendes Bauteil (13) ausgebildet sind, zum Beschränken des Ablassens von Gas aus dem Öffnungs- und Schließdurchlass (12) und
zum Öffnen oder Herbeiführen einer großen Öffnung des Öffnungs- und Schließdurchlasses (12), wenn der dem Kopfbereich des Insassen gegenüberliegende kopfseitige Abschnitt der Stirnfläche (1F) des aufgeblasenen Airbagkissens (1) nach hinten in die zum Insassen entgegengesetzte Richtung bewegt wird, und
ein Verbindungselement (14) zum Verbinden des die Gasentlüftung beschränkenden Bauteils (13) und des kopfseitigen Abschnitts ausgebildet ist, wobei
das Verbindungselement (14) zwischen dem kopfseitigen Abschnitt und dem die Gasentlüftung beschränkenden Bauteil (13) gespannt wird, wenn bei aufgeblasenem Airbagkissen (1) der Kopf des Insassen nicht mit dem kopfseitigen Abschnitt in Kontakt kommt und wobei eine Spannkraft auf das die Gasentlüftung beschränkende Bauteil (13) zum Schließen oder Herbeiführen einer kleinen Öffnung des Öffnungs- und Schließdurchlasses (12) aufgebracht wird, und
das Verbindungselement (14) gelockert wird, wenn der Kopf des Insassen mit dem kopfseitigen Abschnitt des aufgeblasenen Airbagkissens (1) in Kontakt kommt, wobei der kopfseitige Abschnitt nach hinten bewegt wird, wobei die Spannkraft verringert und der Öffnungs- und Schließdurchlass (12) geöffnet oder deren große Öffnung herbeigeführt wird.

4. Fahrzeug nach Anspruch 1, 2 oder 3, wobei der Insasse ein AF05-Dummy-Typ ist.

5. Fahrzeug nach einem der Ansprüche 1 bis 4, wobei
das die Gasentlüftung beschränkende Bauteil (13) den Öffnungs- und Schließdurchlass (12) schließt oder dessen kleine Öffnung herbeiführt, wenn eine Zugkraft im Inneren des Airbagkissens (1) aufgebracht wird, und den Öffnungs- und Schließdurchlass (12) öffnet oder dessen große Öffnung herbeiführt, wenn die Zugkraft verringert wird.

6. Fahrzeug nach Anspruch 3, wobei
das Verbindungselement (14) sich bei Betrachtung des Airbags mit aufgeblasenem Airbagkissen (1) von der linken und rechten Seite des Insassen aus im Wesentlichen parallel zu der Richtung (M_{F}) erstreckt, in der der kopfseitige Abschnitt durch den Kopfbereich gedrückt wird, wenn der Kopfbereich des Insassen in Kontakt mit dem kopfseitigen Abschnitt kommt.

7. Fahrzeug nach Anspruch 6, wobei
sich das Verbindungselement (14) im Wesentlichen horizontal erstreckt oder in der Richtung, in der es sich absenkt, wenn es sich bei aufgeblasenem Airbagkissen (1) vom kopfseitigen Abschnitt entfernt.

8. Fahrzeug nach Anspruch 7, wobei
der Winkel (θ_{T}) der Erstreckungsrichtung des Verbindungselements (14) bezüglich der Horizontalen bei aufgeblasenem Airbagkissen (1) 0 bis 50 Grad beträgt.

9. Fahrzeug nach einem der Ansprüche 5 bis 8, wobei
das Verbindungselement (14) sich bei aufgeblasenem Airbagkissen (1) in einem Bereich von 0 bis 80 mm von einer Mitte des kopfseitigen Abschnitts in seitlicher Richtung des kopfseitigen Abschnitts nach links und rechts fortsetzt.

10. Fahrzeug nach einem der Ansprüche 5 bis 9, wobei
das die Gasentlüftung beschränkende Bauteil eine Entlüftungsklappe (13) ist, die den Öffnungs- und Schließdurchlass (12) abdeckt,
das Verbindungselement (14) bei aufgeblasenem Airbagkissen (1) zwischen dem kopfseitigen Abschnitt und der Entlüftungsklappe (13) gespannt ist, wobei die Bewegung der Entlüftungsklappe (13) vom Airbagkissen (1) nach außen verhindert wird, und
das Verbindungselement (14) gelockert ist, wenn die Entlüftungsklappe (13) sich mit dem Öffnungs- und Schließdurchlass (12) überlappt, um den Öffnungs- und Schließdurchlass (12) zu schließen oder dessen kleine Öffnung herbeizuführen und der Insasse in Kontakt mit dem kopfseitigen Abschnitt des aufgeblasenen Airbagkissens (1) kommt, wobei der kopfseitige Abschnitt nach hinten bewegt wird, so dass die Entlüftungsklappe (13) durch einen Gasdruck im Inneren des Airbagkissens (1) weg vom Öffnungs- und Schließdurchlass (12) bewegt wird und der Öffnungs- und Schließdurchlass (12) geöffnet oder dessen große Öffnung herbeigeführt wird.

11. Fahrzeug nach einem der Ansprüche 1 bis 10 mit einem Gasgenerator zum Aufblasen des Airbagkissens (1).

## Revendications

1. Voiture, comprenant un coussin de sécurité (1) comportant :
a) des orifices d'ouverture et de fermeture (12) à ouvrir et à fermer préférentiellement par des rabats (13) et prévus sur des surfaces latérales gauche et droite du coussin de sécurité (1),
b) des sangles (14), dont les premières extrémités sont reliées aux rabats (13) respectifs, des segments centraux desdites sangles (14) étant insérés dans des orifices d'insertion (15) de sangle respectivement prévus à proximité des orifices d'ouverture et de fermeture (12) sur les surfaces latérales gauche et droite du coussin de sécurité (1) pour relier l'intérieur et l'extérieur du coussin de sécurité (1),
c) une surface frontale (1F) du coussin de sécurité (1) à l'intérieur du coussin de sécurité (1), prévue pour entrer en contact avec un passager assis sur le siège de passager quand le coussin de sécurité (1) est gonflé, et
d) une partie opposée à la tête de la surface frontale (1F) du coussin de sécurité (1) gonflé, opposée à la tête du passager,
e) le coussin de sécurité (1) étant prévu pour que les orifices d'ouverture et de fermeture (12) soient fermés jusqu'à ce qu'un passager entre en contact avec la surface frontale (1F) du coussin de sécurité (1) gonflé,
f) au moins la partie opposée à la tête de la surface frontale (1F) du coussin de sécurité correspond à un pli rentrant (10 ; 10'), en retrait dans une direction contraire au passager par rapport à la périphérie du coussin, dans un état où le gonflement est terminé,
**caractérisée en ce que** la tête appartient à un passager de petite taille correspondant à un mannequin AF05 quand le coussin de sécurité (1) est gonflé,
g) les autres extrémités des sangles (14) sont cousues contre une surface intérieure du pli rentrant (10 ; 10') du coussin de sécurité (1)sur des parties de connexion (16) de sangle, à un emplacement de contact de la tête du passager de petite taille correspondant à un mannequin AF05 assis sur le siège de passager avec la ceinture de sécurité attachée, quand le passager heurte le coussin de sécurité (1) du fait de la collision du véhicule dans l'état où le coussin de sécurité (1) est gonflé,
et **caractérisée**
h) **en ce que** si, dans l'état de gonflement du coussin de sécurité (1), la tête du passager assis sur le siège de passager avec la ceinture de sécurité attachée entre en contact avec la partie opposée à la tête, la direction d'extension de la sangle (14) est parallèle à la direction de déplacement (M_{F}) où la partie opposée à la tête est contrainte par la tête du passager, et les orifices d'ouverture et de fermeture (12) sont ouverts ou amenés à être largement ouverts, et
i) si, dans l'état de gonflement du coussin de sécurité (1), la tête du passager assis sur le siège de passager avec la ceinture de sécurité attachée entre en contact avec la surface frontale (1F) à distance de la partie opposée à la tête, la direction d'extension de la sangle (14) n'est pas parallèle à la direction de déplacement (M_{F}) où la partie opposée à la tête est contrainte par la tête du passager, et les orifices d'ouverture et de fermeture (12) ne sont pas ouverts ou amenés à être faiblement ouverts.

2. Voiture selon la revendication 1,
où, quand le coussin de sécurité (1) est gonflé, un angle (θ_{T}) entre la direction d'extension de la sangle (14) et une direction horizontale
est sensiblement égal à un angle (θ_{F}) entre une direction de déplacement (M_{F}) de la tête d'un mannequin de type AF05 qui entre en contact avec la partie opposée à la tête de la surface frontale (1F), et la direction horizontale, et est supérieur à un angle (θ_{M}) entre une direction de déplacement (M_{M}) de la tête d'un mannequin de type AM50 qui entre en contact avec la surface frontale (1F) au-dessus de la partie opposée à la tête, et la direction horizontale.

3. Voiture selon la revendication 1 ou la revendication 2, où les rabats sont réalisés comme élément de retenue d'échappement gazeux (13) prévu pour retenir l'échappement gazeux de l'orifice d'ouverture et de fermeture (12), et pour ouvrir l'orifice d'ouverture et de fermeture (12) ou amener celui-ci à être largement ouvert quand la partie opposée à la tête de la surface frontale (1F) du coussin de sécurité (1) gonflé opposée à la tête du passager est déplacée vers l'arrière dans la direction contraire au passager, et
où un élément de connexion (14) est prévu pour raccorder l'élément de retenue d'échappement gazeux (13) et la partie opposée à la tête,
ledit élément de connexion (14) étant tendu entre la partie opposée à la tête et l'élément de retenue d'échappement gazeux (13) quand la tête du passager n'entre pas en contact avec la partie opposée à la tête, dans un état où le coussin de sécurité (1) est gonflé et où une force de tension est appliquée sur l'élément de retenue d'échappement gazeux (13) pour fermer l'orifice d'ouverture et de fermeture (12) ou amener celui-ci à être faiblement ouvert, et
où l'élément de connexion (14) est desserré quand la tête du passager entre en contact avec la partie opposée à la tête du coussin de sécurité (1) gonflé, la partie opposée à la tête étant repoussée vers l'arrière, la force de tension étant réduite et l'orifice d'ouverture et de fermeture (12) étant ouvert ou amené à être largement ouvert.

4. Voiture selon la revendication 1, la revendication 2 ou la revendication 3, où le passager est un mannequin de type AF05.

5. Voiture selon l'une des revendications 1 à 4,
où l'élément de retenue d'échappement gazeux (13) ferme l'orifice d'ouverture et de fermeture (12) ou amène celui-ci à être faiblement ouvert quand une force de tension est appliquée à l'intérieur du coussin de sécurité (1), et ouvre l'orifice d'ouverture et de fermeture (12) ou amène celui-ci à être largement ouvert quand la force de tension est réduite.

6. Voiture selon la revendication 3,
où l'élément de connexion (14) s'étend sensiblement parallèlement à la direction (M_{F}) où la partie opposée à la tête est contrainte par la tête quand la tête du passager entre en contact avec la partie opposée à la tête, le coussin de sécurité étant vu depuis la gauche et depuis la droite du passager dans un état où ledit coussin de sécurité (1) est gonflé.

7. Voiture selon la revendication 6,
où l'élément de connexion (14) s'étend sensiblement horizontalement ou dans une direction descendante à partir de la partie opposée à la tête, dans l'état où le coussin de sécurité (1) est gonflé.

8. Voiture selon la revendication 7,
où l'angle (θ_{T}) formé par la direction d'extension de l'élément de connexion (14) avec la direction horizontale est compris entre 0 et 50° dans l'état où le coussin de sécurité (1) est gonflé.

9. Voiture selon l'une des revendications 5 à 8,
où l'élément de connexion (14) est prolongé de 0 à 80 mm dans la partie opposée à la tête, dans les directions latérales gauche et droite depuis le centre de la partie opposée à la tête, dans l'état où le coussin de sécurité (1) est gonflé.

10. Voiture selon l'une des revendications 5 à 9,
où l'élément de retenue d'échappement gazeux est un rabat (13) qui recouvre l'orifice d'ouverture et de fermeture (12),
l'élément de connexion (14) est tendu entre la partie opposée à la tête et le rabat (13) quand le coussin de sécurité (1) est gonflé, un mouvement du rabat (13) à l'extérieur du coussin de sécurité (1) étant empêché, et
l'élément de connexion (14) est desserré quand le rabat (13) chevauche l'orifice d'ouverture et de fermeture (12) pour fermer l'orifice d'ouverture et de fermeture (12) ou amener celui-ci à être faiblement ouvert et que le passager entre en contact avec la partie opposée à la tête du coussin de sécurité (1) gonflé, ladite partie opposée à la tête étant repoussée vers l'arrière, de manière à dégager le rabat (13) de l'orifice d'ouverture et de fermeture (12) sous l'effet d'une pression gazeuse à l'intérieur du coussin de sécurité (1) et à ouvrir l'orifice d'ouverture et de fermeture (12) ou amener celui-ci à être largement ouvert.

11. Voiture selon l'une des revendications 1 à 10, comprenant un générateur de gaz prévu pour gonfler le coussin de sécurité (1).
